# EUROPÄISCHE PATENTSCHRIFT

(11) **EP 3 421 434 B1**
(45) Veröffentlichungstag und Bekanntmachung des Hinweises auf die Patenterteilung: **10.06.2020**
(21) Anmeldenummer: 17179002.5
(22) Anmeldetag: 30.06.2017
(51) Int. Cl.: C03B 37/012, C03B 23/00, C03B 23/043, C03B 23/207, F23D 14/40

(54) **VERFAHREN ZUR ERZEUGUNG EINER STOFFSCHLÜSSIGEN FÜGEVERBINDUNG ZWISCHEN BAUTEILEN AUS QUARZGLAS UND DAFÜR GEEIGNETER HEIZBRENNER**
METHOD FOR GENERATING A STRONG JOINT CONNECTION BETWEEN COMPONENTS MADE OF QUARTZ GLASS AND A SUITABLE HEATING BURNER
PROCÉDÉ DE FABRICATION D'UNE JOINTURE PAR LIAISON DE MATIÈRE ENTRE DES COMPOSANTS EN VERRE DE QUARTZ ET BRÛLEUR ADAPTÉ

(43) Veröffentlichungstag der Anmeldung: 02.01.2019
(73) Patentinhaber: Heraeus Quarzglas GmbH & Co. KG, 63450 Hanau (DE)
(72) Erfinder: Ganz, Oliver, 63486 Bruchköbel (DE)
(74) Vertreter: Staudt, Armin Walter

(56) Entgegenhaltungen:
- EP-A1- 2 008 750
- EP-A1- 2 366 485
- EP-A1- 2 554 319
- WO-A1-2007/039426
- DE-C2- 19 858 831

## Beschreibung

### Technischer Hintergrund

Die Erfindung betrifft ein Schweißverfahren zum Verbinden von einem ersten und einem zweiten Bauteil aus Quarzglas, indem zwischen Verbindungsflächen der Bauteile eine stoffschlüssige Fügeverbindung erzeugt wird, umfassend ein Erhitzen und Erweichen der Bauteile im Bereich der Verbindungsflächen mittels mindestens eines Heizbrenners, ein Aneinanderpressen der Verbindungsflächen gegeneinander unter Bildung eines eine Schweißnaht aufweisenden Bauteil-Verbundes, und ein Abkühlen des Bauteil-Verbundes (siehe Anspruch 1).

Außerdem betrifft die Erfindung einen Heizbrenner zur Erzeugung einer Schweißverbindung zwischen Bauteilen aus Quarzglas gemäß dem Oberbegriff des Anspruchs 7.

Unter Quarzglas wird hier dotiertes oder undotiertes Kieselglas mit einem SiO₂-Gehalt von mindestens 85% verstanden. Bauteile aus Quarzglas werden für eine Vielzahl von Anwendungen eingesetzt, wie beispielsweise als Halbzeug bei der Herstellung optischer Fasern in Form von Rohren oder Vollzylindern, in der Lampenfertigung als Hüllrohre, Kolben, Abdeckplatten oder Reflektorträger für Lampen und Strahler im ultravioletten, infraroten und sichtbaren Spektralbereich, im chemischen Apparatebau oder in der Halbleiterfertigung in Form von Reaktoren und Apparaturen aus Quarzglas für die Behandlung von Halbleiterbauteilen, Trägerhorden, Glocken, Tiegeln, Schutzschilden oder einfachen Quarzglas-Bauteilen, wie Rohre, Stäbe, Platten, Flansche, Ringe oder Blöcke. Zum Erzeugen besonderer Eigenschaften wird Quarzglas mit anderen Substanzen dotiert, wie etwa mit Titan, Aluminium, Bor oder Germanium.

### Stand der Technik

Ein gattungsgemäßes Verfahren zum Verschweißen von Quarzglas-Bauteilen miteinander ist in der WO 2007/039426 A1 beschrieben. Zum stoßweisen Verschweißen eines Hohlzylinders aus hochreinem, synthetisch erzeugtem Quarzglas mit einem Dummy-Rohr aus Quarzglas geringerer Reinheit wird vorgeschlagen, den Hohlzylinder und das Dummy-Rohr mit koaxialen Mittelachsen in eine Drehbank einzuspannen und mittels des Drehbank-Antriebs aufeinander zuzubewegen, so dass sie sich innerhalb eines Muffelrohres im Wirkungsbereich zweier Heizbrenner gegenüberliegen. Die Stirnseiten beider Quarzglas-Bauteile werden mittels der Heizbrenner gemeinsam auf eine Temperatur um 2200 bis 2300 °C erhitzt und dabei erweicht, wobei gleichzeitig die Stirnflächen von Hohlzylinder und Quarzglas-Rohr gegeneinander gepresst werden.

Sofern erforderlich, wird eine Grafitschablone gegen die erweichte Außenoberfläche gepresst und diese dabei geformt. Nach dem Abkühlen wird ein stoffschlüssiger Fügeverbund aus den Quarzglas-Bauteilen erhalten.

Wie verwenden einen Grafitspachtel (purifizierter Grafitstab mit einer schrägen, bearbeiteten Fläche) um falls erforderlich die Schweißnaht zu glätten. Idealerweise können wir nach dem Zusammendrücken der Teile auf weitere Bearbeitung verzichten.

Ein Heizbrenner der eingangs genannten Gattung ist aus der DE198 58 831 C2 bekannt. Der Propan-Sauerstoff-Brenner besteht im Wesentlichen aus einem Brennerkopf mit daran angeschlossenem Brennerschaft. Der Brennerkopf umfasst einen einteiligen Block aus sauerstofffreiem Kupfer, der mit drei Durchgangsbohrungen versehen ist, in die jeweils eine rohrförmige Brennerdüse aus elektropoliertem und hitzebeständigem Edelstahl eingelötet ist. Jede der Brennerdüsen ist mit einem Rohrstück für die Zuleitung eines Brenngases oder eines Brenngasgemischs verbunden, die zusammen einen Brennerschaft bilden, der den Brennerkopf trägt. Die Rohrstücke bestehen ebenfalls aus elektropoliertem und hitzebeständigem Edelstahl und sie münden in ein elektropoliertes und hitzebeständiges Edelstahl-Verteilerstück, welches die einzelnen Rohrstücke vereinigt. Zur Kühlung von Brennerkopf und Brennerdüsen ist in den Brennerkopf ein Kühlwassermantel integriert.

Die EP 2 008 750 A1 bezieht sich auf einen Schweißbrenner zum Wolfram-Inertgasschweißen (WIG). Beim WIG-Schweißen wird zwischen dem Werkstück und einer nicht-abschmelzenden Elektrode aus Wolfram ein Lichtbogen gezündet, der einen drahtförmig zugeführten Schweißzusatz unter Schutzgas aufschmilzt. Beim Brennerkopf des Schweißbrenners wird das obere Ende der WolframElektrode in einer Elektrodenhalterung montiert, die wiederum in einen Kühlkörper hineinragt. Zwischen dem Kühlkörper-Außenmantel und einer Außenkappe ist die Gasdüse für die Schutzgaszufuhr ausgebildet. Die Elektrodenhalterung besteht aus einem Material mit niedrigem thermischem Widerstand, insbesondere aus Kupfer, Silber oder deren Legierungen. Einen ähnlichen Schweißbrenner beschreibt auch die EP 2 366 485 A1.

Aus der EP 2 554 319 A1 ist ein weiterer Schweißbrenner für das Lichtbogenschweißen unter Schutzgas bekannt. Bei diesem wird das Plasma zwischen dem Werkstück und einem Schweißgut in Drahtform gezündet. Der Schweißdraht wird durch die Mittenbohrung einer am Brennerkopf gehaltenen und auswechselbaren Düse zugeführt. Zu den weiteren Komponenten des Brennerkopfes gehören ein Düsenverbindungselement, ein Verschlusselement ein Entriegelungselement und eine Schutzkappe. Es wird erwähnt, dass alle diese Komponenten aus Silber bestehen können, und zwar zwecks guter elektrischer Leitung des Schweißstroms.

### Technische Aufgabenstellung

Aufgrund hoher Temperatur und korrosiver Umgebung kann es beim Schweißprozess zu Bildung und Freisetzung von Verunreinigungen kommen. Dabei können sich Partikel auf den zu verbindenden Quarzglas-Bauteilen und insbesondere auf den erweichten Verbindungsflächen niederschlagen, die bei der Weiterverarbeitung des Verbundes zu Blasen oder anderen Fehlern an Grenzflächen bis hin zu Brüchen führen können. Bei einem Bauteilverbund, der als Halbzeug zur Fertigung optischer Fasern dient, ist die Transparenz der optischen Faser ein entscheidendes Qualitätskriterium. Die meisten Metallverbindungen bilden aber Verunreinigungen in Quarzglas, die zu erhöhter optischer Dämpfung führen.

Den höchsten thermischen und korrosiven Belastungen unterliegt der der Schweißstelle zugewandte Brennermund. Durch Erosion des relativ weichen Kupfers werden hier die Ränder der Edelstahl-Brennerdüsen freigelegt, so dass diese aus dem gekühlten Brennerblok vorstehen. Sie können sich dadurch so stark erhitzen, dass sie glühen und sich die Gefahr eines Flammenrückschlags erhöht.

Der vorliegenden Erfindung liegt daher die Aufgabe zugrunde, ein Verfahren anzugeben, mittels dem eine feste Schweißnaht zwischen zu verbindenden Quarzglas-Bauteilen hergestellt werden kann, wobei Verunreinigungen weitgehend vermieden werden.

Weiterhin liegt der Erfindung die Aufgabe zugrunde, einen zur Durchführung des Verfahrens geeigneten Heizbrenner zur Verfügung zu stellen.

### Allgemeine Beschreibung der Erfindung

Hinsichtlich des Verfahrens wird diese Aufgabe ausgehend von dem eingangs genannten Schweißverfahren erfindungsgemäß dadurch gelöst, dass ein Heizbrenner mit einem Brennerkopf eingesetzt wird, mit einem Grundkörper aus Silber oder aus einer Silberbasislegierung, in dem mindestens eine mit einer Versorgungsleitung für ein Brenngas oder ein Brenngasgemisch verbundene Brennerdüse ausgebildet ist, und der zur Temperierung mit einem Brennerkopfkühlsystem versehen ist, bei dem zwei Kühlwasserrohre für die Kühlwasserzuleitung und -ableitung über einen fluidisch zusammenhängenden Kühlkanal miteinander verbunden sind.

Beim Schweißvorgang werden die zu verbindenden Bauteile im Bereich ihrer Verbindungsflächen unter Einsatz mindestens eines Heizbrenners erhitzt und erweicht, oder es werden mehrere gleichzeitig auf die Verbindungsflächen einwirkende Heizbrenner eingesetzt, die sich beispielsweise gegenüberliegen oder die benachbart zueinander angeordnet sind.

Der mindestens eine Heizbrenner verfügt über einen Brennerkopf, dessen einziger oder wesentlicher Bestandteil in Bezug auf Gewicht und Volumen ein kühlbarer Grundkörper aus Silber oder aus einer Silberbasislegierung ist. Im einfachsten Fall besteht der Brennerkopf ausschließlich aus dem Grundkörper. Der Grundkörper kann aus mehreren Teilen zusammengesetzt sein, vorzugsweise ist er aber einteilig aus einem Block ausgeführt.

Für die Zufuhr eines Brenngases oder eines Brenngasgemischs ist im Brennerkopf mindestens eine Brennerdüse ausgebildet, vorzugsweise sind es mindestens drei Brennerdüsen. Jede Brennerdüse umfasst eine Düsenöffnung am Brennermund, die bevorzugt von einer Bohrung im Grundkörper gebildet wird. Die Düsenöffnung kann sich in Richtung auf den Brennermund verjüngen. Als Brennermund wird die der Schweißstelle zugewandte Vorderseite des Brennerkopfes bezeichnet.

Silber zeichnet sich durch eine hohe Wärmeleitfähigkeit von 430 W/(m·K) aus. Es ist daher besonders geeignet, rasch überschüssige Wärme aus dem Schweißprozess abzuführen, und der Brennerkopf kann vergleichsweise einfach auf einer Temperatur unterhalb der Schmelztemperatur von Silber gehalten werden, die bei 962 °C liegt. Das für eine ausreichende Kühlung erforderliche Kühlkörpervolumen kann vergleichsweise gering ausfallen, so dass der Grundkörpers und damit auch der Brennerkopf weniger voluminös als bei einem Grundkörper aus Kupfer sein können.

Die im Vergleich zu Kupfer schnellere Wärmeabfuhr, die vergleichsweise niedrige Temperatur und das potentiell geringere Volumen des Brennerkopfes tragen zu einer geringen Erosion und einer geringen Partikelgenerierung bei.

Bei der Erosion des Brennerkopfes bilden sich silberhaltige Verbindungen, wie etwa Silberoxid oder Silbersulfid. Diese Verbindungen erzeugen in den Wellenlängenbereichen, die in der Telekommunikationstechnik typischerweise für die Lichtübertragung genutzt werden, keinen Dämpfungsbeitrag.

Der Grundkörper besteht aus Silber, das vollständig oder mindestens teilweise in metallischer Form vorliegt, oder es besteht aus einer Silberbasislegierung. Die Silberbasislegierung enthält Silber als Hauptlegierungsbestandteil mit einem Gewichtsanteil von mehr als 75%. Metallisches Silber ist jedoch vergleichsweise weich. Insbesondere zwecks Erhöhung ihrer Härte oder ihrer Schmelztemperatur kann die Silberbasislegierung ein oder mehrere weitere Metalle oder eine oder mehrere Verbindungen enthalten, wie etwa Oxide, Boride, Carbide oder Nitride. Als zusätzliche Bestandteile kommen Metalle oder Verbindungen aus der Gruppe umfassend Pd, Pt, Sn, In, Ba, Y, Al, Sr, Ca, Ga, Ge, Mn, Zn, Sn, Sb, in Betracht, wobei der Gesamtgehalt dieser Elemente in der Silberbasislegierung weniger als 25 Gew.-% beträgt und der Rest Silber mit herstellungsbedingten Verunreinigungen ist.

Insbesondere im Hinblick auf eine geringe Beladung der zu verbindenden Bauteile im Bereich ihrer Verbindungsflächen mit Fremdelementen hat es sich aber als besonders vorteilhaft erwiesen, wenn ein Heizbrenner eingesetzt wird, bei dem der Silberanteil des Brennerkopf-Grundkörpers mindestens 90 Gew.-%, vorzugsweise mindestens 99 Gew.-% beträgt.

Bei einer besonders bevorzugten Verfahrensweise wird ein Heizbrenner eingesetzt, bei dem die mindestens eine Brennerdüse als Einsatz aus Silber oder aus einer Silberbasislegierung ausgeführt ist.

In dem Fall besteht die Brennerdüse aus einem separaten, beispielsweise einem rohrförmigen Einsatzteil, das in eine Durchgangsbohrung des Grundkörpers eingesetzt ist. Grundkörper und Brennerdüse können dabei aus einem ähnlichen Werkstoff oder aus demselben Werkstoff bestehen, so dass der erosionsbedingte Materialabtrag beim Schweißprozess nicht oder weniger zur Freilegung des Düsenrandes führt. Die Gefahr des Erhitzens der aus dem gekühlten Grundkörper herausragenden Düse ist daher verringert. Die besonders beanspruchte Brennerdüse kann aber auch vorteilhaft aus einer Silberbasislegierung mit einer im Vergleich zum Grundkörper höheren Verschleißfestigkeit bestehen. Im Fall eines Heizbrenners mit einem Brennerkopf mit mehreren Brennerdüsen bestehen vorzugsweise alle Brennerdüsen aus Silber oder aus einer Silberbasislegierung.

Bei einer anderen, ebenfalls bevorzugte Verfahrensvariante wird ein Heizbrenner eingesetzt, bei dem die mindestens eine Brennerdüse als Bohrung im Brennerkopf-Grundkörper ausgeführt ist.

In dem Fall besteht die Brennerdüse nicht aus einem separaten Bauteil, sondern sie wird durch eine Öffnung im Grundkörper gebildet, beispielsweise durch eine Durchgangsbohrung des Grundkörpers.

Es hat sich auch bewährt, wenn ein Heizbrenner eingesetzt wird, bei dem ein den Verbindungsflächen zugewandter Brennermund des Grundkörpers poliert ist.

Durch die Politur erhält die Brennermund-Oberfläche eine höhere Reflektivität, die dem Aufheizen des Brennerkopfes entgegenwirkt.

Es hat sich als vorteilhaft erwiesen, wenn ein Heizbrenner eingesetzt wird, bei dem die Verbindung zwischen Brennerdüse und Gasversorgungsleitung als lösbare Formschlussverbindung ausgeführt ist.

Dadurch kann der wertvolle Brennerkopf unabhängig von der Installation für die Zufuhr des Brenngases oder des Brenngasgemischs ausgetauscht und beispielsweise einem Recycling zugeführt werden. Die Formschlussverbindung ist beispielsweise als Schraubverbindung ausgeführt und gasdicht.

Hinsichtlich des Heizbrenners wird die oben genannte Aufgabe ausgehend von einem Heizbrenner der eingangs genannten Gattung erfindungsgemäß dadurch gelöst, dass der Grundkörper aus Silber oder aus einer Silberbasislegierung besteht.

Der erfindungsgemäße Heizbrenner verfügt über einen Brennerkopf, dessen einziger oder wesentlicher Bestandteil in Bezug auf Gewicht und Volumen ein Grundkörper aus Silber oder aus einer Silberbasislegierung ist. Im einfachsten Fall besteht der Brennerkopf ausschließlich aus dem Grundkörper. Der Grundkörper kann aus mehreren Teilen zusammengesetzt sein, vorzugsweise ist er aber einteilig aus einem Block ausgeführt.

Für die Zufuhr eines Brenngases oder eines Brenngasgemischs ist im Brennerkopf mindestens eine Brennerdüse ausgebildet, vorzugsweise sind es mindestens drei Brennerdüsen. Jede Brennerdüse umfasst eine Düsenöffnung am Brennermund, die von einem in den Grundkörper eingesetzten Einsatzteil, bevorzugt aber von einer Bohrung im Grundkörper gebildet wird. Die Düsenöffnung kann sich in Richtung auf den Brennermund verjüngen. Als Brennermund wird die der Schweißstelle zugewandte Vorderseite des Brennerkopfes bezeichnet.

Silber zeichnet sich durch eine hohe Wärmeleitfähigkeit von 430 W/(m·K) aus. Es ist daher besonders geeignet, rasch überschüssige Wärme aus dem Schweißprozess abzuführen, und der Brennerkopf kann vergleichsweise einfach auf einer Temperatur unterhalb der Schmelztemperatur von Silber gehalten werden, die bei 962 °C liegt. Das für eine ausreichende Kühlung erforderliche Kühlkörpervolumen kann vergleichsweise gering ausfallen, so dass der Grundkörpers und damit auch der Brennerkopf weniger voluminös als bei einem Grundkörper aus Kupfer sein können.

Die im Vergleich zu Kupfer schnellere Wärmeabfuhr, die vergleichsweise niedrige Temperatur und das potentiell geringere Volumen des Brennerkopfes tragen zu einer geringen Erosion und einer geringen Partikelgenerierung beim Einsatz in einem Schweißprozess zur Herstellung einer stoffschlüssigen Fügeverbindung zwischen Quarzglas-Bauteilen bei.

Bei der Erosion des Brennerkopfes bilden sich silberhaltige Verbindungen, insbesondere Silberoxid. Diese Verbindungen erzeugen in den Wellenlängenbereichen, die in der Telekommunikationstechnik typischerweise für die Lichtübertragung genutzt werden, keinen Dämpfungsbeitrag.

Der Grundkörper besteht aus Silber, das vollständig oder mindestens teilweise in metallischer Form vorliegt; es können auch Silberverbindungen enthalten sein, wie etwa Silberoxid. Oder der Grundkörper besteht aus einer Silberbasislegierung. Diese enthält Silber als Hauptlegierungsbestandteil mit einem Gewichtsanteil von mehr als 75%. Metallisches Silber ist jedoch vergleichsweise weich. Insbesondere zwecks Erhöhung ihrer Härte oder ihrer Schmelztemperatur kann die Silberbasislegierung ein oder mehrere weitere Metalle oder eine oder mehrere Verbindungen enthalten, wie etwa Oxide, Boride, Carbide oder Nitride. Als zusätzliche Bestandteile kommen Metalle oder Verbindungen aus der Gruppe umfassend Pd, Pt, Sn, In, Ba, Y, AI, Sr, Ca, Ga, Ge, Mn, Zn, Sn und Sb, wobei der Gesamtgehalt dieser Elemente in der Silberbasislegierung weniger als 25 Gew.-% beträgt und der Rest Silber mit herstellungsbedingten Verunreinigungen ist.

Insbesondere im Hinblick auf eine geringe Ausbringung von Fremdelementen beim bestimmungsgemäßen Einsatz des Heizbrenners hat es sich als vorteilhaft erwiesen, wenn der Silberanteil des Brennerkopf-Grundkörpers mindestens 90 Gew.-%, vorzugsweise mindestens 99 Gew.-% beträgt.

Bei einer besonders bevorzugten Ausführungsform des erfindungsgemäßen Heizbrenners ist die mindestens eine Brennerdüse als Einsatz aus Silber oder aus einer Silberbasislegierung ausgeführt.

In dem Fall besteht die Brennerdüse aus einem separaten, beispielsweise einem rohrförmigen Einsatzteil, das in eine Durchgangsbohrung des Grundkörpers eingesetzt ist. Grundkörper und Brennerdüse bestehen dabei aus einem ähnlichen Werkstoff und besonders bevorzugt aus demselben Werkstoff, so dass der erosionsbedingte Materialabtrag beim Schweißprozess nicht oder weniger zur Freilegung des Düsenrandes führt. Die Gefahr des Erhitzens der aus dem gekühlten Grundkörper herausragenden Düse ist daher verringert. Im Fall eines Heizbrenners mit einem Brennerkopf mit mehreren Brennerdüsen bestehen vorzugsweise alle Brennerdüsen aus Silber oder aus einer Silberbasislegierung.

Bei einer anderen, ebenfalls bevorzugten Ausführungsform des Heizbrenners ist die mindestens eine Brennerdüse als Bohrung im Brennerkopf-Grundkörper ausgeführt.

In dem Fall besteht die Brennerdüse nicht aus einem separaten Bauteil, sondern sie wird im Bereich des Brennermundes durch eine Öffnung aus dem Material des Grundkörpers gebildet, beispielsweise durch eine Durchgangsbohrung im Grundkörper.

Es hat sich bewährt, wenn ein den Verbindungsflächen zugewandter Brennermund des Grundkörpers poliert ist.

Durch die Politur erhält die Brennermund-Oberfläche eine höhere Reflektivität, die dem Aufheizen des Brennerkopfes entgegenwirkt.

Eine Ausführungsform des Heizbrenners hat sich als vorteilhaft erwiesen, bei der die Verbindung zwischen Brennerdüse und Gasversorgungsleitung als lösbare Formschlussverbindung ausgeführt ist.

Dadurch kann der wertvolle Brennerkopf unabhängig von der Installation für die Zufuhr des Brenngases oder des Brenngasgemischs ausgetauscht und beispielsweise einem Recycling zugeführt werden. Der Formschluss erfolgt beispielsweise mittels gasdichter Schraubverbindung.

Der erfindungsgemäße Heizbrenner ist insbesondere geeignet zur Durchführung des erfindungsgemäßen Verfahrens.

Nachfolgend wird die Erfindung anhand von Ausführungsbeispielen und einer Zeichnung näher erläutert. Im Einzelnen zeigt:
- **Figur 1**: eine Ausführungsform der erfindungsgemäßen Vorrichtung mit einer Einhausung in Form eines Muffelrohres in einer Ansicht auf dessen Mantelfläche in schematischer Darstellung,
- **Figur 2**: das Muffelrohr gemäß Figur 1 in einer Ansicht auf dessen Stirnseite,
- **Figur 3**: eine erste Ausführungsform des erfindungsgemäßen Heizbrenners in einem Ausschnitt und in einer perspektivischen Darstellung, und
- **Figur 4**: eine zweite Ausführungsform des erfindungsgemäßen Heizbrenners in einem Ausschnitt und in perspektivischer Darstellung.

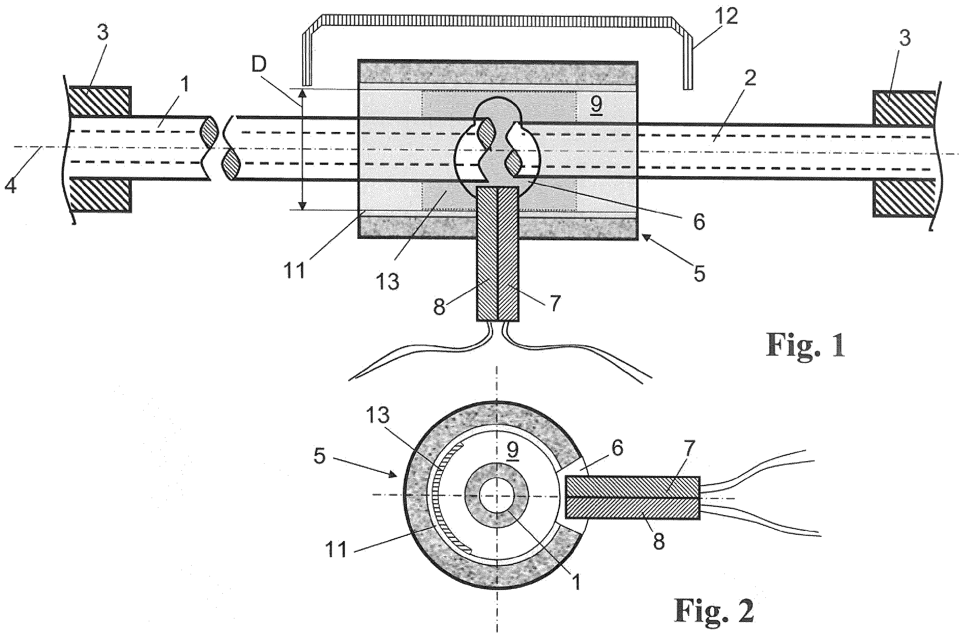

Die Vorrichtung gemäß den **Figuren 1 und 2** dient zum stirnseitigen Anschweißen eines Halters in Form eines Quarzglas-Rohres 1 an einen Hohlzylinder 2. Der herzustellende Verbund aus Quarzglas-Rohr 1 und Hohlzylinder 2 ist dazu vorgesehen, in Verbindung mit einem sogenannten Kernstab, der in die Innenbohrung des Hohlzylinders 2 eingesetzt wird, zu einer Vorform für optische Fasern oder direkt zu der optischen Faser elongiert zu werden.

Das Quarzglas-Rohr 1 besteht aus Quarzglas geringerer Qualität, das beispielsweise größere Mengen an Verunreinigungen, Blasen, usw., enthalten kann. Das Quarzglas-Rohr 1 weist bei gleichem Innendurchmesser eine etwas dünnere Wandstärke als der Quarzglas-Zylinder 2 auf. Während des Elongierprozesses wird der Hohlzylinder 2 mittels des Quarzglas-Rohres 1 im Ziehofen gehalten und/oder das Quarzglas-Rohr 1 dient zum Anziehen beim Elongieren. Hierzu ist der Quarzglas-Hohlzylinder 2 an einem Ende oder an beiden Enden mit einem derartigen Quarzglas-Rohr versehen.

Die Vorrichtung umfasst weiterhin eine Drehbank, in deren Spannfutter 3 einerseits das Quarzglas-Rohr 1 und andererseits der Hohlzylinder 2 so eingespannt sind, dass ihre Mittelachsen 4 koaxial zueinander verlaufen und sich die zu verschweißenden Stirnseiten gegenüberliegen. Das Erhitzen und Erweichen der sich gegenüberliegenden Bereiche von Quarzglas-Rohr 1 und Hohlzylinder 2 erfolgt innerhalb eines Muffelrohres 5 aus opakem Quarzglas, das einen Innendurchmesser "D" von 400 mm aufweist. Das Muffelrohr 5 ist dreiteilig ausgebildet und beidseitig offen. Das Muffelrohr-Mittelteil 11 weist in seiner Seitenwand eine Öffnung 6 auf, durch die zwei Heizbrenner 7, 8 in den Innenraum 9 hineinragen. Es wird aus hochreinem, opakem Quarzglas aus einem Werkstoff erzeugt, der unter dem Handelsnamen "OM 100" der Heraeus Quarzglas GmbH & Co. KG, Hanau im Handel erhältlich ist.

An der den Heizbrennern 7, 8 gegenüberliegenden Seite ist die Innenseite des Muffelrohres 5 mit einem einfachen, halbschalenförmigen Einlegeteil 13 aus hochreinem Quarzglas belegt, welches das Mittelteil 11 des Muffelrohres 5 vor Hitzeeinwirkung schützt und das die Temperaturverteilung innerhalb des Muffelrohres 5 vergleichmäßigt.

Oberhalb des Muffelrohres 5 ist eine Absaugung 12 vorgesehen, die sich teilweise entlang der stirnseitigen Öffnungen des Muffelrohres 5 erstreckt und mittels der das heiße Abgas abgesaugt wird.

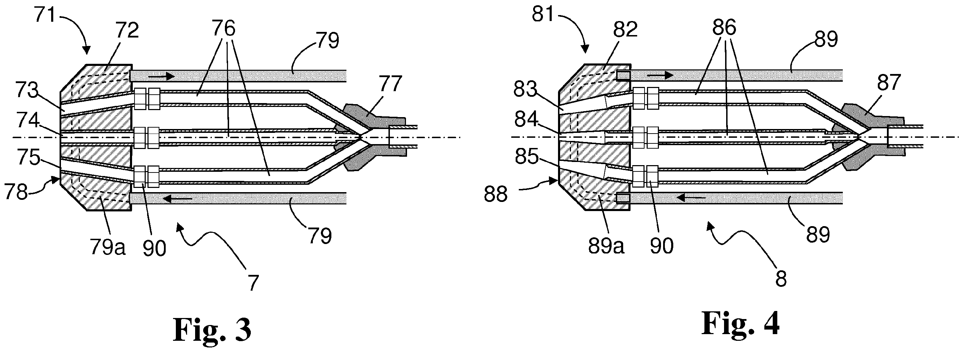

Die beiden Heizbrenner 7, 8 sind baugleich. Zwei Ausführungsformen werden anhand der Figuren 3 und 4 näher beschrieben.

Bei der Ausführungsform von **Figur 3** weist der Heizbrenner 7 einen Brennerkopf 71 mit einem integrierten Kühlwassermantel auf, der im Wesentlichen aus einem einteiligen, blockförmigen Grundkörper 72 aus hochreinem Silber (Bezeichnung: Ag 3N7 mit 99,97% Ag) mit einem Kupfergehalt von weniger als 30 Gew.-ppm besteht. Der Grundkörper 72 hat im Wesentlichen Quaderform mit einer Grundfläche von 60 mm x 30 mm und mit einer Höhe von 40 mm, und mit einer Abschrägung in Richtung zum Brennermund 78, wodurch die Fläche des Brennermundes 78 und damit die der Brennerflamme zugewandte Oberfläche reduziert wird. Der Brennermund 78 ist poliert.

In dem Grundkörper 72 sind drei Durchgangsbohrungen ausgeführt, in die innen elektropolierte Röhrchen aus Silber (Ag 3N7) eingelötet sind, die als Brennerdüsen 73, 74, 75 für die Zufuhr eines Propan-Sauerstoffgemisches dienen. Jede der Brennerdüsen 73, 74, 75 schließt mit einem Ende bündig am Brennermund 78 ab und ist am anderen Ende mit einem innen elektropolierten Rohrstück 76 aus Edelstahl für die Zuleitung des Brenngasgemisches mittels einer lösbaren Schraubverbindung 90 verbunden. Diese Rohrstücke 76 münden in üblicher Weise einem Edelstahl-Verteilerstück 77, welches die einzelnen Rohrstücke 76 zu einem gemeinsamen Zuführungsrohr vereinigt. In einer anderen Ausführungsform werden anstelle der Brennerdüsen aus hochreinem Silber (Ag 3N7) solche aus einer verschleißfesteren kupfer- und nickelfreien Silberbasislegierung wie beispielsweise einer Silber-Palladium-Legierung eingesetzt.

Zur Kühlung des Brennerkopfes 71 mit den Brennerdüsen 73, 74, 75 sind gemäß der Erfindung zwei Kühlwasserrohre 79 für die Kühlwasserzuleitung und -ableitung vorgesehen, die im Grundkörper 72 zu einem Brennerkopf-Kühlsystem miteinander verbunden sind. Zu diesem Zweck sind im Brennerkopf Kühlkanäle 79a durch Einbringen entsprechender Bohrungen geschaffen. In den düsenfreien Bereichen des Brennerkopfes werden an den von der Brennerflamme abgewandten Seiten Bohrungen angebracht, die mit Querbohrungen verbunden werden. Die Öffnungen nach außen werden anschließend mit Stopfen verschlossen und verlötet. Es entsteht dadurch ein fluidisch zusammenhängender Kanal, der auf seinem Pfad das Brennerkopf-Volumen möglichst gut durchsetzt.

Die Ausführungsform des Heizbrenners 8 von **Figur 4** unterscheidet sich von derjenigen von Figur 3 in der Ausgestaltung der Brennerdüsen 83, 84, 85 und in der Art des Brenngas- und Kühlmittelanschlusses.

Der Brennerkopf 81 besteht auch hier im Wesentlichen aus einem einteiligen, blockförmigen Grundkörper 82 aus reinem Silber (Bezeichnung: Ag 3N7 mit 99,97% Ag) und denselben Abmessungen wie bei der Ausführungsform von Figur 3. Der Grundkörper 82 ist auch hier in Richtung auf den Brennermund 78 abgeschrägt und der Brennermund 78 ist poliert.

In den Grundkörper 82 sind Durchgangsbohrungen eingebracht, die gleichzeitig die in Richtung auf den Brennermund 88 leicht konisch zulaufen und die die Brennerdüsen 83, 84, 85 bilden. Die Düsenöffnungen 83; 84, 85 im Bereich des Brennermundes 88 bestehen somit aus dem Material des Grünkörpers 82. Die Durchgangsbohrungen haben ein Innengewinde, in das mittels einer Schraubverbindung 90 innen elektropolierte Rohrstücke 86 aus Edelstahl für die Zuleitung des Brenngasgemisches eingeschraubt sind. Die Rohrstücke 86 münden in einem lösbaren Edelstahl-Verteilerstück 87, welches die einzelnen Rohrstücke 86 zu einem gemeinsamen Zuführungsrohr vereinigt.

Zur Kühlung des Brennerkopfes 81 mit den Brennerdüsen 83, 84, 85 sind gemäß der Erfindung zwei Kühlwasserrohre 89 für die Kühlwasserzuleitung und -ableitung vorgesehen, die ebenfalls in Bohrungen des Grundkörpers 82 eingeschraubt und die im Grundkörper 82 zu einem Brennerkopf-Kühlsystem miteinander verbunden sind. Zu diesem Zweck sind im Grundkörper 82 entsprechende Bohrungen eingebracht, die einen fluidisch durchgängigen Kühlkanal 89a bilden.

Bei dieser Ausführungsform des Heizbrenners 8 ist der Brennerkopf 81 somit mit allen Medienleitungen (86; 89) mittels Gewinde verbunden und somit ohne weiteres lösbar. Der Brennerkopf 81 kann somit leicht ausgetauscht und einem Recycling zugeführt und das Medienversorgungssystem (86; 87, 89) weiter genutzt werden.

Nachfolgend wird ein Ausführungsbeispiel für das erfindungsgemäße Verfahren anhand der Figuren näher erläutert:
Der Quarzglas-Hohlzylinder 2 wird anhand des bekannten OVD-Verfahrens durch Flammenhydrolyse einer siliciumhaltigen Ausgangssubstanz hergestellt. Er weist einen Außendurchmesser von 200 mm und einen Innendurchmesser von 50 mm auf. Zur Herstellung einer Schweißverbindung mit einem Quarzglas-Rohr 1 aus Quarzglas geringerer Reinheit werden Hohlzylinder 2 und Quarzglas-Rohr 1 mit koaxialen Mittelachsen 4 in die Futter 3 der Drehbank eingespannt und mittels des Drehbank-Antriebs aufeinander zubewegt, so dass sie sich innerhalb des Muffelrohres 5 im Wirkungsbereich der Heizbrenner 7, 8 gegenüberliegen. Die der Schweißstelle zugewandten Stirnseitenbereiche werden mittels der Heizbrenner 7, 8 auf eine Temperatur um 2200 bis 2300 °C erhitzt und erweicht. Dabei wird ein Oberflächenbereich mit einer Erstreckung von etwa 150 bis 200 mm beiderseits der herzustellenden Schweißnaht flammenpoliert. Gleichzeitig werden die Stirnflächen von Hohlzylinder 2 und Quarzglas-Rohr 1 gegeneinander gepresst werden. Dabei werden durch die Bohrungen von Hohlzylinder 2 und Quarzglas-Rohr 1 ein Sauerstoffstrom geleitet.

Der Einsatz der erfindungsgemäßen Heizbrenner 7, 8 mit einem Grundkörper (72; 82) aus Silber gewährleistet eine im Vergleich zu einem Grundkörper aus Kupfer schnellere Wärmeabfuhr, damit einhergehend eine vergleichsweise niedrigere Temperatur und damit zu einer geringen Erosion und einer geringen Partikelgenerierung. Die sich durch Erosion des Grundkörpers (72; 82) bildenden silberhaltigen Oxid- oder Sulfidverbindungen wirken sich auf die Dämpfung der aus dem Hohlzylinder erzeugten optischen Fasern nicht nennenswert aus.

Statische Zugfestigkeitsmessungen ergaben, dass keine Brüche im Bereich der Schweißstelle auftraten, sogar wenn die maximale Testlast in Höhe von 3 Tonnen angelegt wurde.

In einer alternativen Verfahrensweise, die sich insbesondere zum Verschweißen großer Bauteile als günstig erwiesen hat, sind die Heizbrenner 7, 8 nicht parallel zueinander angeordnet, sondern im Bereich der beiderseitigen Verbindungsflächen um die Wandung des Muffelrohres 5 verteilt. Dadurch wird die Hitzeeinwirkung der Heizbrenner 7, 8 auf einen größeren Flächenbereich des Muffelrohres 5 verteilt und diese dadurch thermisch weniger belastet. Die Heizbrenner 7, 8 können sich beispielsweise an der Muffelrohr-Wandung gegenüberliegen.

## Patentansprüche

1. Verfahren zur Erzeugung einer stoffschlüssigen Fügeverbindung zwischen Verbindungsflächen von Bauteilen aus Quarzglas, umfassend ein Erhitzen und Erweichen der Verbindungsflächen mittels mindestens eines Heizbrenners (7; 8), ein Aneinanderpressen der Verbindungsflächen gegeneinander unter Bildung eines eine Schweißnaht aufweisenden Bauteil-Verbundes, und ein Abkühlen des Bauteil-Verbundes, **dadurch gekennzeichnet, dass** ein Heizbrenner (7; 8) mit einem Brennerkopf (71; 81) eingesetzt wird, mit einem kühlbaren Grundkörper (72; 82) aus Silber oder aus einer Silberbasislegierung, in dem mindestens eine mit einer Versorgungsleitung (76; 86) für ein Brenngas oder ein Brenngasgemisch verbundene Brennerdüse (73; 74; 75; 83; 84; 85) ausgebildet ist, und der zur Temperierung mit einem Brennerkopfkühlsystem (79; 79a; 89; 89a) versehen ist, bei dem zwei Kühlwasserrohre (79) für die Kühlwasserzuleitung und -ableitung über einen fluidisch zusammenhängenden Kühlkanal (79a) miteinander verbunden sind.

2. Verfahren nach Anspruch 1, **dadurch gekennzeichnet, dass** ein Heizbrenner eingesetzt wird, bei dem der Silberanteil des Brennerkopf-Grundkörpers (72; 82) mindestens 90 Gew.-%, vorzugsweise mindestens 99 Gew.-% beträgt.

3. Verfahren nach Anspruch 1 oder 2, **dadurch gekennzeichnet, dass** ein Heizbrenner (7; 8) eingesetzt wird, bei dem die mindestens eine Brennerdüse als Einsatz (73; 74; 75) aus Silber oder aus einer Silberbasislegierung ausgeführt ist.

4. Verfahren nach Anspruch 1 oder 2, **dadurch gekennzeichnet, dass** ein Heizbrenner (7; 8) eingesetzt wird, bei dem die mindestens eine Brennerdüse als Bohrung (83; 84; 85) im Brennerkopf-Grundkörper (82) ausgeführt ist.

5. Verfahren nach einem der vorhergehenden Ansprüche, **dadurch gekennzeichnet, dass** ein Heizbrenner (7; 8) eingesetzt wird, bei dem ein den Verbindungsflächen zugewandter Brennermund (78; 88) poliert ist.

6. Verfahren nach einem der vorhergehenden Ansprüche, **dadurch gekennzeichnet, dass** ein Heizbrenner (7; 8) eingesetzt wird, bei dem die Verbindung zwischen Brennerdüse (73; 74; 75; 83; 84; 85) und Gasversorgungsleitung (76; 86) als lösbare Formschlussverbindung (90) ausgeführt ist.

7. Heizbrenner zur Erzeugung einer Schweißverbindung zwischen Bauteilen aus Quarzglas, aufweisend einen Brennerkopf (71; 81) mit einem kühlbaren Grundkörper (72; 82), in dem mindestens eine Brennerdüse (73; 74; 75; 83; 84; 85) ausgebildet ist, ein Brennerkopfkühlsystem (79; 79a; 89; 89a) zur Temperierung des Brennerkopfes (71; 81), bei dem zwei Kühlwasserrohre (79) für die Kühlwasserzuleitung und -ableitung über einen fluidisch zusammenhängenden Kühlkanal (79a) miteinander verbunden sind, und eine mit der Brennerdüse (73; 74; 75; 83; 84; 85) verbundene Versorgungsleitung (76; 86) für ein Brenngas oder ein Brenngasgemisch, **dadurch gekennzeichnet, dass** der kühlbare Grundkörper (72; 82) aus Silber oder aus einer Silberbasislegierung besteht.

8. Heizbrenner nach Anspruch 7, **dadurch gekennzeichnet, dass** der Silberanteil des Brennerkopf-Grundkörpers (72; 82) mindestens 90 Gew.-%, vorzugsweise mindestens 99 Gew.-% beträgt.

9. Heizbrenner nach Anspruch 7 oder 8, **dadurch gekennzeichnet, dass** die mindestens eine Brennerdüse als Einsatz (73; 74; 75) aus Silber oder aus einer Silberbasislegierung besteht.

10. Heizbrenner nach Anspruch 7 oder 8, **dadurch gekennzeichnet, dass** die mindestens eine Brennerdüse als Bohrung (83; 84; 85) im Brennerkopf-Grundkörper (82) ausgeführt ist.

11. Heizbrenner nach einem der Ansprüche 7 bis 10, **dadurch gekennzeichnet, dass** ein den Verbindungsflächen zugewandter Brennermund (78; 88) poliert ist.

12. Heizbrenner nach einem der Ansprüche 7 bis 11, **dadurch gekennzeichnet, dass** die Verbindung zwischen Brennerdüse (73; 74; 75; 83; 84; 85) und Gasversorgungsleitung (76; 86) als lösbare Formschlussverbindung (90) ausgeführt ist.

## Claims

1. A method for producing an integral bond between connection surfaces of components of quartz glass, comprising heating and softening of the connection surfaces by way of at least one heating burner (7; 8); pressing the connection surfaces against each other to form a component assembly having a weld seam; and cooling the component assembly, **characterized in that** a heating burner (7; 8) with a burner head (71; 81) is used, said burner head (71; 81) comprises a coolable base body (72; 82) of silver or of a silver-based alloy, in said base body (72; 82) is formed at least one burner nozzle (73; 74; 75; 83; 84; 85), which is connected to a supply line (76; 86) for a fuel gas or a fuel gas mixture, wherein said base body (72; 82) is provided for temperature control with a burner-head cooling system (89; 79a; 89; 89a), wherein in said burner-head cooling system (89; 79a; 89; 89a) at least two cooling water pipes (79) for the cooling water supply and cooling water discharge are connected to each other via a fluidically continuous cooling channel (79a).

2. Method according to claim 1, **characterized in that** a heating burner is used, in which the silver content of the base body (72; 82) of the burner head is at least 90% by wt., preferably a least 99% by wt.

3. Method according to claim 1 or 2, **characterized in that** a heating burner (7; 8) is used, in which the at least one burner nozzle is configured as an insert (73; 74; 75) of silver or of a silver-based alloy.

4. Method according to claim 1 or 2, **characterized in that** a heating burner (7; 8) is used, in which the at least one burner nozzle is configured as a bore (83; 84; 85) in the base body (82) of the burner head (71; 81).

5. Method according to one of the preceding claims, **characterized in that** a heating burner (7; 8) is used, in which a burner mouth (78; 88) facing the connection surfaces is polished.

6. Method according to one of the preceding claims, **characterized in that** a heating burner (7; 8) is used, in which the connection between the burner nozzle (73; 74; 75; 83; 84; 85) and the gas supply line (76, 86) is designed as a detachable positive connection (90).

7. Heating burner for producing a welded joint between components of quartz glass, comprising a burner head (71; 81) comprising a coolable base body (72; 82), in said base body (72; 82) at least one burner nozzle (73; 74; 75; 83; 84; 85) is formed; a burner-head cooling system (79; 79a; 89; 89a) for the temperature control of the burner head (71; 81), wherein in said burner-head cooling system (89; 79a; 89; 89a) at least two cooling water pipes (79) for the cooling water supply and cooling water discharge are connected to each other via a fluidically continuous cooling channel (79a); and a supply line (76; 86) connected to the burner nozzle (73; 74; 75; 83; 84; 85) for a fuel gas or a fuel gas mixture, **characterized in that** the coolable base body (72; 82) is made of silver or of a silver-based alloy.

8. Heating burner according to claim 7, **characterized in that** the silver content of the base body (72; 82) of the burner head is at least 90% by wt., preferably at least 99% by wt.

9. Heating burner according to claim 7 or 8, **characterized in that** the at least one burner nozzle consists as an insert (73; 74; 75) of silver or of a silver-based alloy.

10. Heating burner according to 7 or 8, **characterized in that** the at least one burner nozzle is configured as a bore (83; 84; 85) in the base body (82) of the burner head (71; 81).

11. Heating burner according to one of the claims 7 to 10, **characterized in that** a burner mouth (78; 88) which faces the connection surfaces is polished.

12. Heating burner according to one of the claims 7 to 10, **characterized in that** the connection between burner nozzle (73; 74; 75; 83; 84; 85) and gas supply line (76; 86) is configured as a detachable positive connection (90).

## Revendications

1. Procédé de fabrication d'une jointure par liaison de matière entre des surfaces de liaison de composants en verre de quartz, comprenant le chauffage et ramollissement des surfaces de liaison au moyen d'au moins un brûleur (7 ; 8), la pression l'une contre l'autre des surfaces de liaison permettant de former un élément composite comportant un cordon de soudure, et un refroidissement de l'élément composite, **caractérisé en ce que** l'on utilise un brûleur (7 ; 8) comprenant une tête de brûleur (71 ; 81), comprenant un corps de base (72 ; 82) refroidissable en argent ou en alliage à base d'argent, dans lequel est formée au moins une buse de brûleur (73 ; 74 ; 75 ; 83 ; 84 ; 85) reliée à une conduite d'alimentation (76 ; 86) pour un gaz combustible ou un mélange de gaz combustible, et qui est pourvu, pour la régulation de la température, d'un système de refroidissement de tête de brûleur (79 ; 79a ; 89 ; 89a), dans lequel deux tuyaux d'eau de refroidissement (79) sont reliés l'un à l'autre pour l'arrivée et l'évacuation de l'eau de refroidissement par le biais d'un canal de refroidissement (79a) assurant une continuité fluidique.

2. Procédé selon la revendication 1, **caractérisé en ce que** l'on utilise un brûleur, dans lequel la teneur en argent du corps de base de tête de brûleur (72 ; 82) est d'au moins 90 % en poids, de préférence au moins 99 % en poids.

3. Procédé selon la revendication 1 ou 2, **caractérisé en ce que** l'on utilise un brûleur (7 ; 8), dans lequel l'au moins une buse de brûleur est réalisée sous la forme d'une pièce rapportée (73 ; 74 ; 75) en argent ou en alliage à base d'argent.

4. Procédé selon la revendication 1 ou 2, **caractérisé en ce que** l'on utilise un brûleur (7 ; 8), dans lequel l'au moins une buse de brûleur est réalisée sous la forme d'un trou (83 ; 84 ; 85) dans le corps de base de tête de brûleur (82).

5. Procédé selon l'une des revendications précédentes, **caractérisé en ce que** l'on utilise un brûleur (7 ; 8), dans lequel un bec de brûleur (78 ; 88) tourné vers les surfaces de liaison est poli.

6. Procédé selon l'une des revendications précédentes, **caractérisé en ce que** l'on utilise un brûleur (7 ; 8), dans lequel la liaison entre la buse de brûleur (73 ; 74 ; 75 ; 83 ; 84 ; 85) et la conduite d'alimentation en gaz (76 ; 86) est réalisée sous la forme d'une liaison par complémentarité de forme (90) libérable.

7. Brûleur destiné à la fabrication d'une liaison soudée entre des composants en verre de quartz, comportant une tête de brûleur (71 ; 81) comprenant un corps de base (72 ; 82) refroidissable, dans laquelle est formée au moins une buse de brûleur (73 ; 74 ; 75 ; 83 ; 84 ; 85), un système de refroidissement de tête de brûleur (79 ; 79a ; 89 ; 89a) pour la régulation de la température de la tête de brûleur (71 ; 81), dans lequel deux tuyaux d'eau de refroidissement (79) sont reliés l'un à l'autre pour l'arrivée et l'évacuation de l'eau de refroidissement par le biais d'un canal de refroidissement (79a) assurant une continuité fluidique, et une conduite d'alimentation (76 ; 86) reliée à la buse de brûleur (73 ; 74 ; 75 ; 83 ; 84 ; 85) pour un gaz combustible ou un mélange de gaz combustible, **caractérisé en ce que** le corps de base (72 ; 82) refroidissable se compose d'argent ou d'un alliage à base d'argent.

8. Brûleur selon la revendication 7, **caractérisé en ce que** la teneur en argent du corps de base de tête de brûleur (72 ; 82) est d'au moins 90 % en poids, de préférence au moins 99 % en poids.

9. Brûleur selon la revendication 7 ou 8, **caractérisé en ce que** l'au moins une buse de brûleur consiste en une pièce rapportée (73 ; 74 ; 75) en argent ou en alliage à base d'argent.

10. Brûleur selon la revendication 7 ou 8, **caractérisé en ce que** l'au moins une buse de brûleur est réalisée sous la forme d'un trou (83 ; 84 ; 85) dans le corps de base de tête de brûleur (82).

11. Brûleur selon l'une des revendications 7 à 10, **caractérisé en ce qu'**un bec de brûleur (78 ; 88) tourné vers les surfaces de liaison est poli.

12. Brûleur selon l'une des revendications 7 à 11, **caractérisé en ce que** la liaison entre la buse de brûleur (73 ; 74 ; 75 ; 83 ; 84 ; 85) et la conduite d'alimentation en gaz (76 ; 86) est réalisée sous la forme d'une liaison par complémentarité de forme (90) libérable.
